# EUROPEAN PATENT SPECIFICATION

(11) **EP 3 893 221 B1**
(45) Date of publication and mention of the grant of the patent: **07.02.2024**
(21) Application number: 21164699.7
(22) Date of filing: 24.03.2021
(51) Int. Cl.: G08G 1/16, G08G 1/01, G08G 1/04, G06V 20/40, G08G 1/052, G06V 20/52, G06V 20/54, H04N 7/18

(54) **EVENT DETECTION METHOD AND APPARATUS FOR CLOUD CONTROL PLATFORM, DEVICE, AND STORAGE MEDIUM**
VERFAHREN UND VORRICHTUNG ZUR EREIGNISDETEKTION FÜR EINE CLOUD-STEUERPLATTFORM, VORRICHTUNG UND SPEICHERMEDIUM
PROCÉDÉ ET APPAREIL DE DETECTION D'ÉVÉNEMENT POUR PLATEFORME DE COMMANDE DE NUAGE, DISPOSITIF ET SUPPORT D'INFORMATIONS

(30) Priority: 16.09.2020 CN 202010972805
(43) Date of publication of application: 13.10.2021
(73) Proprietor: Apollo Intelligent Connectivity (Beijing) Technology Co., Ltd., Beijing 100176 (CN)
(72) Inventor: LIU, Bo, BEIJING, 100085 (CN)
(74) Representative: Wynne-Jones IP Limited

(56) References cited:
- CN-A- 111 598 009
- CN-A- 111 767 850
- CN-A- 111 767 851
- CN-B- 107 644 475
- US-A1- 2013 204 515

## Description

### TECHNICAL FIELD

The present disclosure relates to a field of data processing, and particularly to a field of intelligent transportation.

### BACKGROUND

In an automatic driving scene, it is necessary to determine travelling states of surrounding vehicles during a travelling process of an autonomous vehicle, so as to perform corresponding operations in time to avoid traffic accidents. Therefore, how to record and analyze the to-be-analyzed travelling states of these target vehicles through video data has become an urgent problem to be solved in the field of automatic driving.

Chinese patent application CN111598009A discloses a method and device for monitoring an emergency brake vehicle, electronic equipment and a storage medium, and relates to the field of intelligent transportation. The specific implementation scheme is as follows: acquiring a monitoring video of a road; according to the monitoring video, obtaining the deceleration of the vehicle running on the road; and if the deceleration ofthe vehicle represents that the vehicle is a suddenly-braked vehicle, sending the position of the suddenly-braked vehicle to target vehicles around the suddenly-braked vehicle.

US patent application US20130204515A1 discloses a traffic accident detection device of detecting traffic accident that estimates a speed variation for a vehicle, and detects dangerous events or traffic accidents. A time series estimation unit (202) chronologically estimates a speed from a detected speed of a vehicle that a sensor unit (102) has detected, and acquires a first estimated value; and a reverse time series estimation unit (204) reverse chronologically estimates a speed from the detected speed, and acquires a second estimated value. An integration estimation unit (206) estimates the speed and the speed shift of the vehicle by defining the first estimated value as an integrated estimated value until a time when the distance between the first estimated value and the second estimated value is at maximum, and defining the second estimated value as the integrated estimated value at the time the distance is at maximum and thereafter.

### SUMMARY

In order to solve at least one problem in the prior art, the embodiments of the present disclosure provide an event detection method and apparatus for a cloud control platform, a device and a storage medium.

In a first aspect, an embodiment of the present disclosure provides an event detection method as claimed in claim 1.

In a second aspect, an embodiment of the present disclosure provides an electronic device, including:
at least one processor; and
a memory communicatively connected to the at least one processor, wherein
the memory stores instructions, which are executable by the at least one processor to enable the at least one processor to perform the method provided by claim 1

In a third aspect, an embodiment of the present disclosure provides a computer readable storage medium, which stores computer instructions for enabling a computer to perform the method provided by claim 1

Any one of the above embodiments has the following advantages or beneficial effects: the acceleration of the target vehicle is calculated according to the acquired surveillance video, and then it is judged whether an emergency event occurs for the target vehicle according to the acceleration of the target vehicle, so that an emergency event detection can be carried out on each vehicle in the road by means of data acquired by a large number of cameras in the road environment, and the emergency situation of each vehicle in the road traffic scene can be grasped quickly and accurately.

Other effects of the above optional manners will be explained as follows in conjunction with the specific embodiments.

### BRIEF DESCRIPTION OF THE DRAWINGS

The accompanying drawings are provided for better understanding of the solution, rather than limiting the present disclosure. In which,
FIG. 1 is a schematic diagram of an event detection method according to an embodiment of the present disclosure;
FIG. 2 is a schematic diagram of an acceleration calculation in a successive differential method according to an embodiment of the present disclosure;
FIGS. 3A to 3C are schematic diagrams of a relationship between a speed and time of an emergency braking event according to an embodiment of the present disclosure;
FIG. 4 is a schematic diagram of an event detection method according to another embodiment of the present disclosure;
FIG. 5 is a schematic diagram of an event detection apparatus according to another embodiment of the present disclosure;
FIG. 6 is a schematic diagram of an event detection apparatus according to another embodiment of the present disclosure;
FIG. 7 is a schematic diagram of an event detection apparatus according to another embodiment of the present disclosure;
FIG. 8 is a schematic diagram of an event detection apparatus according to another embodiment of the present disclosure;
FIG. 9 is a block diagram of an electronic device for implementing an event detection method according to an embodiment of the present disclosure.

### DETAILED DESCRIPTION OF THE EMBODIMENTS

Embodiments of the present disclosure are described below with reference to the accompanying drawings, including various details of the embodiments of the present disclosure to facilitate the understanding, and they should be considered as merely exemplary. Thus, it should be realized by those of ordinary skill in the art that various changes and modifications can be made to the embodiments described here without departing from the scope of the present disclosure. Also, for the sake of clarity and conciseness, the contents of well-known functions and structures are omitted in the following description.

The embodiments of the present disclosure provide a detection method, which acquires video data in an acquisition area through cameras provided in a road or other environment, determines an object in a motion state in the acquisition area as a target object based on the video data, and determines acceleration information of the target object based on the video data. Then, based on the acceleration information, it is determined whether an emergency event occurs in the target object. Therefore, in some scenes, such as a road traffic scene, early warning information about the occurrence of the emergency event can be sent to other objects around the target object. In the road traffic scene, since a large number of cameras are provided in the road, it can ensure a timely detection of the occurrence of the emergency event in the target object, and then make subsequent operations such as early warning according to the fact that the emergency event occurs.

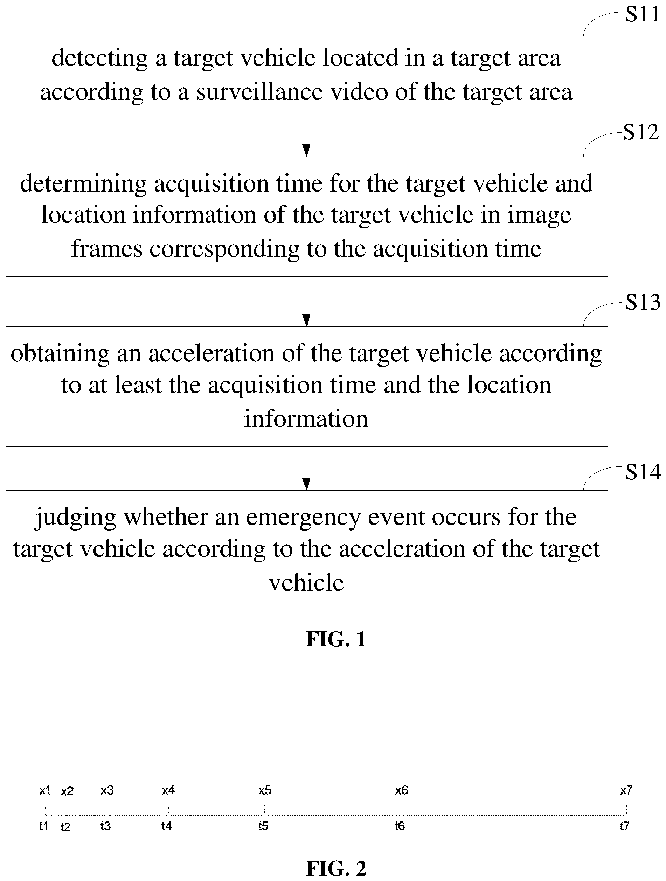

Firstly, an embodiment of the present disclosure provides an event detection method. As shown in FIG. 1, the method includes the following steps.

In step S11, a target vehicle located in a target area is detected according to a surveillance video for the target area;

In step S12, acquisition time for the target vehicle and location information of the target vehicle in image frames corresponding to the acquisition time are determined.

In step S13, an acceleration of the target vehicle is obtained according to at least the acquisition time and the location information; and

In step S14, it is judged whether an emergency event occurs for the target vehicle according to the acceleration of the target vehicle.

In this embodiment, the surveillance video includes a plurality of image frames, and may be a video acquired by a video capturing device disposed around the target area. For example, when the method of this embodiment is applied to a road traffic scene, video data may be acquired by cameras arranged at locations such as both sides of a road, road intersections and buildings around the road. The video data may also be acquired by cameras disposed on other moving objects such as vehicles. In this embodiment, in order to detect the target vehicle in the target area, any target detection algorithm may be adopted to detect the surveillance video.

In this embodiment, it can be determined whether it is necessary to judge whether an emergency event occurs for the target vehicle according to a capturing range of the surveillance video. For example, if it is determined that the capturing range of the surveillance video includes a motor vehicle lane or an intersection based on data of a high-precision map, steps S11 to S14 are performed to judge whether an emergency event occurs for the target vehicle.

In this embodiment, the target vehicle may monitor one of the vehicles in a motion state in the surveillance video, such as a motor vehicle, a non-motor vehicle, etc. In one implementation, the target vehicle may be one of the vehicles with a certain speed in the surveillance video. Contour information of objects in each video frame and motion and non-motion areas in each video frame may be determined based on the surveillance video. Then, based on the contour information of the objects in each video frame and the motion and non-motion areas in each video frame, one or more objects in the motion state are determined from the objects in the video frame.

In the embodiment of the present disclosure, the contour information of the objects may be determined based on one or several video frames in the surveillance video. For example, the contour information of each object in a video frame may be obtained through an instance segmentation method. For example, a neural network-based segmentation method may be adopted, in which a segmentation background may be items (e.g., roads, sky, etc.) other than the objects, and a segmentation foreground may be various objects (e.g., persons, motor vehicles, non-motor vehicles, etc.).

In this embodiment, the operation of detecting a target vehicle located in a target area according to a surveillance video of the target area may include performing step S12 when determining that there are other target objects behind the target object in the motion direction the target object. Specifically, specific lane information of the target object in the target area may be detected, a traffic flow direction corresponding to the lane information may be acquired according to high-precision map data, and it may be determined whether there is any other vehicle behind the target vehicle according to the vehicle information and the traffic flow direction provided by the surrounding video acquisition devices, and if yes, step S12 is performed.

In this embodiment, the target area may be a coverage area of the surveillance video, or an area of interest within the coverage area of the surveillance video. For example, when the method of this embodiment is applied to a road traffic scene, the target area may be a road area in the surveillance video.

In this embodiment, the acquisition time of the target vehicle may include a plurality of target time points, which may be time points included in the surveillance video. For example, if a time range of the surveillance video is from t1 to t100, the target time point may be any time point from t1 to t100. Each of the target time points may correspond to a specific image frame. For a target object, there may be one or more target time points. When there are a plurality of target time points, intervals therebetween may be the same or different.

In this embodiment, the operation of determining acquisition time for the target vehicle and location information of the target vehicle in an image frame corresponding to the acquisition time may include: determining a plurality of target time points for the target vehicle in the surveillance video; acquiring, according to the determined target time points, corresponding image frames; determining pixel location information of the target vehicle in the image frames; and taking the pixel location information as the location information of the target vehicle in the image frames. In a specific embodiment, a Kalman filter may be adopted to filter locations corresponding to the acquired target time points, so as to avoid a large jitter of the locations of the target vehicle.

In this embodiment, the operation of determining acquisition time for the target vehicle and location information of the target vehicle in an image frame corresponding to the acquisition time may further include: determining a plurality of target time points for the target vehicle in the surveillance video; acquiring, according to the determined target time points, corresponding image frames; determining pixel location information of the target vehicle in the image frames; converting the location information of the target vehicle in the image frames into location information in a world coordinate system; and taking the location information in the world coordinate system as the location information of the target vehicle in the image frames.

In this embodiment, the acceleration of the target vehicle is obtained according to the acquisition time and the location information, the acquisition time may include a plurality of target time points, each corresponding to a respective one of a plurality of pieces of location information, so that a time Vs. location curve may be obtained according to the plurality of target time points and the corresponding plurality of pieces of location information, and then the acceleration information of the target vehicle may be obtained through mathematical calculation. For example, an equation about displacement and time may be obtained using the plurality of target time points and the corresponding plurality of pieces of location information, thereby obtaining the acceleration.

In this embodiment, the operation of judging whether an emergency event occurs for the target vehicle according to the acceleration of the target vehicle may include judging whether an emergency event occurs for the target vehicle according to at least the acceleration of the target vehicle. Specifically, the emergency event may be an emergency braking event of the target vehicle, an emergency accelerating event of the target vehicle or any other driving event related to the acceleration of the target vehicle. The emergency event may also be an event which occurs in a short time period during travelling of the target vehicle and may lead to a traffic accident if the surrounding vehicles do not react in time. In other embodiments, it is also possible to judge whether an emergency event occurs for the target vehicle according to other parameters of the target vehicle in combination with the acceleration of the target vehicle. For example, it may be judged whether an emergency event occurs for the target vehicle according to the acceleration and the speed of the target vehicle.

In an example not covered by the scope of the claims, it may be judged whether an emergency event occurs for the target vehicle according to at least one of a value of the acceleration and a direction of the acceleration. For example, a sudden change of the direction of the acceleration may be adopted to judge that an emergency event, such as an emergency turn or a sudden lane change, occurs for the target vehicle. It may be judged according to the value of the acceleration that an event such as an emergency braking or an emergency acceleration occurs for the target vehicle.

In the embodiment of the present disclosure, the acceleration of the target vehicle is calculated according to the acquired surveillance video, and then it is judged whether an emergency event occurs for the target vehicle according to the acceleration of the target vehicle, so that an emergency event analysis can be carried out on each vehicle in the road by means of data acquired by a large number of cameras in the road environment, and the emergency situation of vehicles in the road traffic scene can be learnt quickly and accurately. This facilitates not only providing travelling state information of the surrounding vehicles to an autonomous vehicle in time, but also providing the travelling state information of other surrounding vehicles to an ordinary vehicle in time, so as to help drivers of the autonomous vehicle and the ordinary vehicle to learn the sudden change of the travelling state of any other vehicle in the road environment in time. For example, when the target vehicle is in a state of sudden braking, a vehicle behind the target vehicle may be subjected to a traffic accident such as a rear-end collision due to insufficient reaction. Through the method provided by the embodiment of the present disclosure, the emergency event such as the vehicle sudden braking may be quickly detected, so that the surrounding vehicles of the target vehicle can be notified quickly, which facilitates safe travelling of the vehicles in the road traffic scene.

The event detection method in the embodiment of the present disclosure may be performed by various road side devices, such as a road side sensing device, a road side computing device connected to the road side sensing device, a server device connected to the road side computing device, or a server device directly connected to the road side sensing device. The server device in the embodiment of the present disclosure is, for example, a cloud control platform, a vehicle-road cooperative management platform, a central subsystem, an edge computing platform, a cloud computing platform, etc.

In the embodiment, the operation of obtaining an acceleration of the target vehicle according to at least the acquisition time and the location information at least includes:
determining a plurality of target time points in the acquisition time; and
calculating an acceleration of the target vehicle at each of the target time points, according to location information in image frames corresponding to the target time points and a time interval between the target time points.

In this embodiment, a plurality of target time points may be determined from the acquisition time at an equal time interval. For example, the acquisition time includes all continuous time between t1 and t100, i.e., unlimited target time points. It is determined that the target time points include t1, t2, t3, t4, t5, t6 and t7 from t1 to t100 according to the time interval t. Locations x1, x2, x3, x4, x5, x6 and x7 of the target vehicle at the seven target time points are obtained according to the image frames corresponding to the seven target time points. Next, the motion between the adjacent target time points may be fitted as a uniformly variable motion. Specifically, a location difference may be calculated according to the locations of the target vehicle corresponding to two target time points, e.g., a location difference x3-x1 is calculated according to the locations x1 and x3 of the target vehicle corresponding to the target time points t1 and t3, i.e., a displacement of the target vehicle at a time interval between the two target time points is obtained. Then, the acceleration of the target vehicle in a uniformly variable motion state from t1 to t3 is calculated as the acceleration of the target vehicle from t1 to t3 according to an acceleration calculation method of the uniformly variable motion.

In an example not covered by the scope of the claims, a plurality of target time points may be determined in the acquisition time at an equal time interval, which may be a time interval between the adjacent image frames.

In an example not covered by the scope of the claims, a fitting curve of displacement Vs. time may also be obtained according to the target time points and a plurality of pieces of location information of the target vehicle, each corresponding to a respective one of the target time points, and the acceleration of the target vehicle may be obtained by calculating a slope of the fitting curve.

In this example not covered by the scope of the claims, the acceleration of the target vehicle at each of the target time points is calculated according to the location information of the image frame corresponding to the target time point and the time interval between the target time points, and the location information and the time interval used in the calculation may be directly obtained from the surveillance video of the target vehicle, so that the calculation speed is high and the calculation result is accurate.

In one embodiment, the operation of calculating an acceleration of the target vehicle at each of the target time points, according to location information in an image frame corresponding to the target time point and a time interval between the target time points includes: calculating a fitted acceleration of the target vehicle at an intermediate target time point, according to a previous target time point and location information corresponding thereto, and a next target time point and location information corresponding thereto, to obtain an acceleration of the target vehicle at the intermediate target time point. The intermediate target time point is between the previous target time point and the next target time point.

In this embodiment, a curve of a motion of the target vehicle may be approximated to the uniformly variable motion using a piecewise linearization method. Because a speed-time motion curve of the target vehicle is smooth, each point on the curve can be reached continuously, and may linear approximation may be performed in a certain continuous range around each point, so that the curve can be divided into smaller segments, and it is considered that the target vehicle is in a uniformly variable motion in each of the segments. Therefore, the acceleration of the target vehicle may be calculated in a successive differential method. As shown in FIG. 2, in a case where the target time points t1, t2, t3, t4, t5, t6 and t7 are obtained at an equal interval, any of the following groups, i.e., t3 and t7, t2 and t6, t1 and t5 and locations of the target vehicle corresponding to the group may be selected to calculate a fitted acceleration of the target vehicle at a time point t4 as the acceleration of the target vehicle at a moment t4. Specifically, a formula of the fitted acceleration of the target vehicle calculated according to t3 and t7 and corresponding locations x3 and x7 of the target vehicle is a1= (x7-x3)/4Δt². A formula of a fitted acceleration of the target vehicle calculated according to t2 and t6 and corresponding locations x2 and x6 of the target vehicle is a2= (x6-x2)/4Δt². A formula of a fitted acceleration of the target vehicle calculated according to t1 and t5 and corresponding locations x1 and x5 of the target vehicle is a3= (x5-x1) /4Δt², where Δt is the time interval between the adjacent target time points. Any one of a4, a5 and a6 may be selected as the acceleration of the target vehicle at the moment t4.

In this embodiment, the previous target time point and the location information corresponding thereto and the next target time point and the location information corresponding thereto may be set. For example, the fitted acceleration of the target vehicle at the time point t4 may be calculated as the acceleration of the target vehicle at the moment t4, by using t1 and t7 and the locations of the target vehicle respectively corresponding thereto. Specifically, a formula of the fitted acceleration a4 calculated according to t1 and t7 and the corresponding locations x1 and x7 of the target vehicle is a4=(x7-x1)/6Δt².

In this embodiment, when the time interval is small enough, the motion of the target vehicle in the time interval may be approximated as a uniformly variable motion, and the calculated acceleration is close to the actual acceleration. This calculation method has a high accuracy, and thereby can be taken as an effective reference in the subsequent judgment of whether an emergency event occurs.

In one embodiment, the operation of obtaining an acceleration of the target vehicle at the intermediate target time point includes: taking an average value of a plurality of fitted accelerations corresponding to the intermediate target time point as an acceleration at the intermediate target time point.

In one embodiment, the motion of the target vehicle in a small range around the intermediate target time point is fitted into a uniformly variable motion, and the acceleration of the target vehicle is calculated using a successive differential method. Still referring to FIG. 2, when the target time points t1, t2, t3, t4, t5, t6 and t7 are obtained at an equal interval, three fitted accelerations of the target vehicle at the time point t4 may be calculated according to t3 and t7, t2 and t6, t1 and t5 and the locations of the target vehicle respectively corresponding thereto, and then an average value of the three fitted accelerations may be calculated to obtain the acceleration of the target vehicle at the moment t4. Specifically, a formula of the fitted acceleration calculated according to t3 and t7 and the corresponding locations x3 and x7 of the target vehicle is a4=2×(x7-x3)/(t7-t3)². A formula of the fitted acceleration calculated according to t2 and t6 and the corresponding locations x2 and x6 of the target vehicle is a1=(x6-x2)/4Δt². A formula of the fitted acceleration calculated according to t1 and t5 and the corresponding locations x1 and x5 of the target vehicle is a2=(x5-x1)/4Δt². Next, an average value of a4, a5 and a6 may be taken as the acceleration of the target vehicle, that is, a calculation formula of the acceleration a at the moment t4 is a=(x7+x6+t5-t1-x2-x3)/12Δt², where Δt is the time interval between the adjacent target time points.

In this embodiment, the previous target time point and the location information corresponding thereto and the next target time point and the location information corresponding thereto may be set. For example, the fitted acceleration of the target vehicle at the time point t4 may be calculated as the acceleration of the target vehicle at the moment t4, using the locations of the target vehicle corresponding to t1 and t7 respectively. Specifically, a formula of the fitted acceleration a4 calculated according to t1 and t7 and the corresponding locations x1 and x7 of the target vehicle is a4=(x7-x1)/6Δt².

In this embodiment, a plurality of fitted accelerations are calculated for a target time point, and then an average value of the fitted accelerations is obtained as an acceleration of the target vehicle at the target time point, which can further improve the accuracy of the calculated value of the acceleration.

In this embodiment, the emergency event is an emergency braking event of the target vehicle; and the operation of judging that a preset emergency event occurs in the target vehicle according to the acceleration of the target vehicle includes: in a case where an acceleration variance of the target vehicle is less than a threshold value of the acceleration variance, determining that a preset emergency event occurs for the target vehicle when at least one of the following conditions is met:
an absolute value of the acceleration of the target vehicle is greater than a first acceleration threshold value;
an absolute value of an average value of the accelerations of the target vehicle is greater than a second acceleration threshold value; and
the number of the accelerations of the target vehicle with absolute values greater than a third acceleration threshold value is greater than a number threshold value.

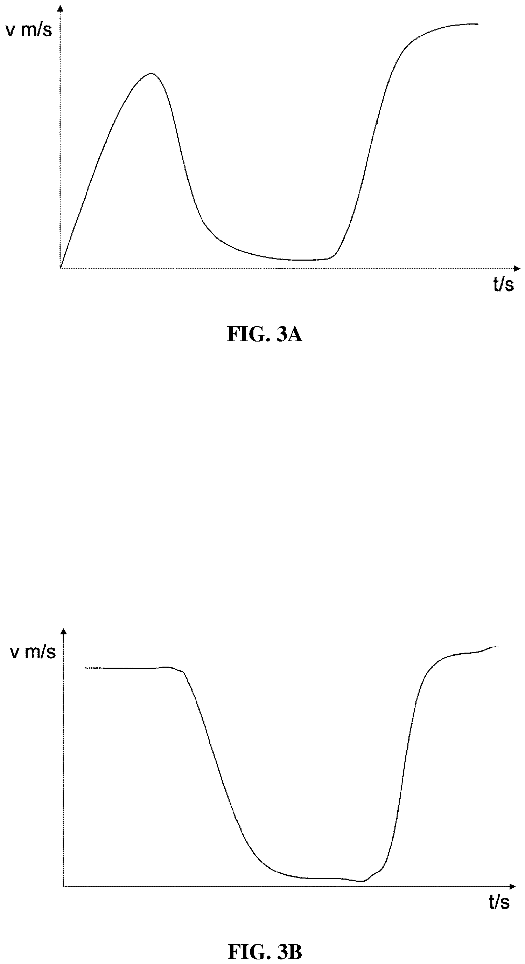

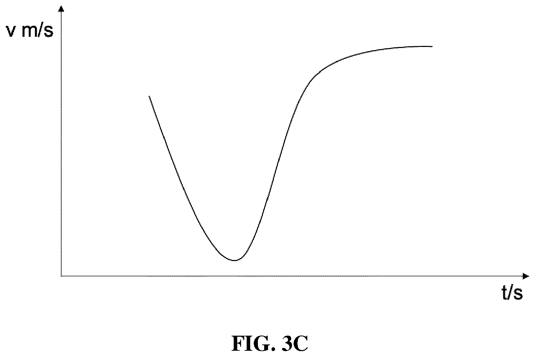

In this embodiment, FIGS. 3A to 3C show the situations where an emergency braking event may occur when the target vehicle is travelling on a road. FIG. 3A shows that an emergency braking event occurs when the vehicle starts to accelerate. FIG. 3B shows that an emergency braking event occurs during normal travelling of the vehicle. FIG. 3C shows that the vehicle in any state accelerates immediately after an emergency braking event occurs.

In this embodiment, it may be set that an emergency braking event occurs when one or more of the above judgment conditions are met according to a looseness of a judgment policy. For example, under a loose judgment policy, if any of the above judgment conditions are met, it may be judged that an emergency braking event occurs for the target vehicle. Under a moderate judgment policy, if more than one of the above judgment conditions is met, it may be judged that an emergency braking event occurs for the target vehicle. Under a strict judgment policy, when all of the above judgment conditions are met, it is judged that an emergency braking event occurs for the target vehicle.

In a case where the acceleration variance of the target vehicle is less than the threshold value of the acceleration variance, it means that the calculated acceleration has a small noise and a high accuracy. The first acceleration threshold value, the second acceleration threshold value and the third acceleration threshold value may be the same.

In this embodiment, whether an emergency braking event occurs can be determined according to the absolute value of the acceleration, which avoids the above problems caused by the voluntary report of the emergency braking event from the vehicle, reduces the early warning delay, and achieves a high universality.

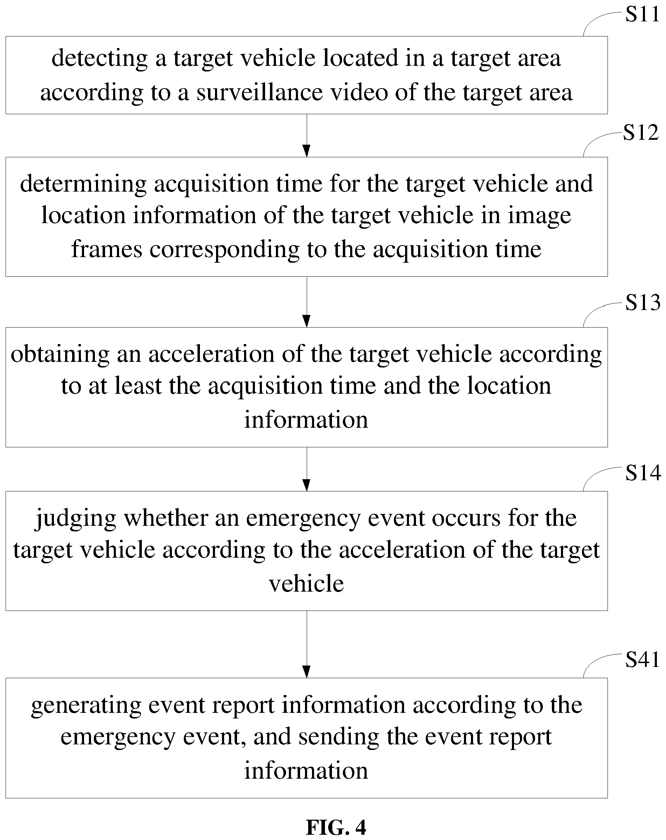

In one embodiment, based on the event detection method of FIG. 1, the event detection method of FIG. 4 further includes step S41.

In S41, event report information is generated according to the emergency event, and sending the event report information.

In this embodiment, a receiver of the event report information may be a designated server, which, after receiving the event report, may send the event report information to vehicles surrounding the target vehicle, so that other vehicles can perform corresponding operations in time to avoid accidents.

The receiver of the event report information may be other vehicles surrounding the target vehicle. The vehicles may communicate with each other through Vehicle To Everything (V2X), and a report on the emergency event can be sent and obtained. For a vehicle equipped with an On-Board Unit (OBU), a report of a preset event may be obtained through a platform. Or, Road Side Units (RSUs) may be set up in the road sides to communicate with each other through microwaves and send the report of the emergency event to the surrounding vehicles. The OBU represents an identity of an autonomous vehicle. For an autonomous vehicle, it is necessary to acquire information on an occurrence of a traffic accident in time, and adjust a travelling route according to the latest road traffic conditions in a shortest time, so as to avoid an occurrence of any other traffic accident in a case where the traffic accident has occurred in a road section where the travelling route passes.

In this embodiment, the receiver of the event report information may be other vehicles surrounding the target vehicle, and information on the occurrence of the emergency event for the target vehicle may be shared with the surrounding vehicles through a vehicle network, an on-board external display device, the OBU, etc., so that other vehicles can perform corresponding operations in time to avoid accidents.

In a specific implementation, the target vehicle is an autonomous vehicle.

In another specific implementation, the receiver of the event report information is an autonomous vehicle.

In another specific implementation, the receiver of the event report information is an autonomous vehicle within a set range around the target vehicle. Vehicle positioning may be performed through V2X communication, so as to determine the vehicles surrounding the target vehicle. That is, a vehicle installed with an OBU may report a currently unique ID of the vehicle (such as an engine number), a current location of the vehicle and a timestamp of a current reporting moment by broadcast. The location of the vehicle may be obtained by its own positioning system, and a differential Global Position System (GPS) may be installed in the vehicle to achieve positioning of a higher precision. After receiving the information reported by the vehicle, an edge computing platform or a cloud computing platform firstly uses a Kalman filter to filter the reported locations of the obstacles, so as to make the reported locations of the obstacles be smoother and avoid a large jitter of the locations of the obstacles. Next, the vehicles surrounding the target vehicle are determined according to the location information reported by each vehicle.

In one embodiment, the operation of detecting a target vehicle located in a target area according to a surveillance video of the target area includes: determining speeds of objects in a target area according to the surveillance video; and taking an object having a speed greater than a speed threshold value as the target vehicle.

In this embodiment, the speed threshold value may be determined according to the safety requirements.

It can be understood that an object with a too low motion speed will hardly have a serious emergency braking event, and a certain speed fluctuation will be caused at a low speed due to the inertia of the tracking algorithm. In view of this, this embodiment may filter out the objects moving at low speeds to reduce the calculation amount and improve the reaction speed.

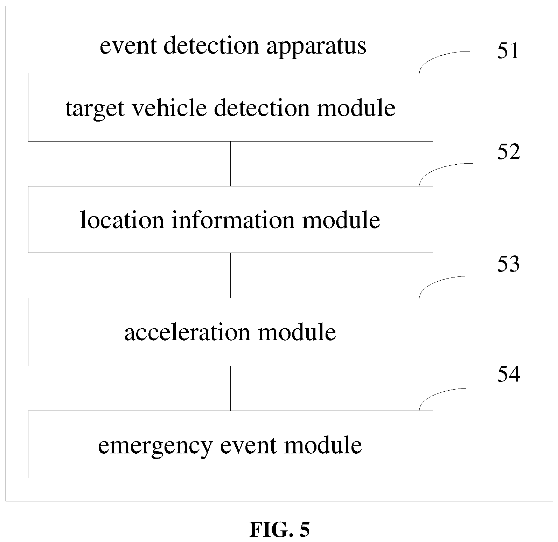

Examples not covered by the scope of the claims of the present disclosure further provide an event detection apparatus, as shown in FIG. 5. The apparatus includes a target vehicle detection module 51, a location information module 52, an acceleration module 53, and an emergency event module 54.

The target vehicle detection module 51 is configured to detect a target vehicle located in a target area according to a surveillance video of the target area.

The location information module 52 is configured to determine acquisition time for the target vehicle and location information of the target vehicle in image frames corresponding to the acquisition time.

The acceleration module 53 is configured to obtain an acceleration of the target vehicle according to at least the acquisition time and the location information.

The emergency event module 54 is configured to judge whether an emergency event occurs for the target vehicle according to the acceleration of the target vehicle.

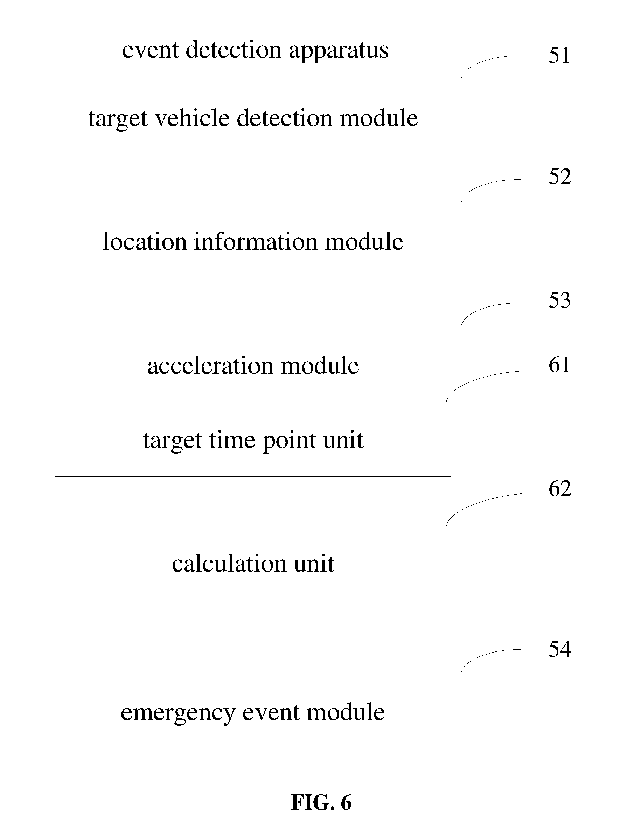

In an example not covered by the scope of the claims, as shown in FIG. 6, the acceleration module 53 includes a target time point unit 61 and a target time point unit 61.

The target time point unit 61 is configured to determine a plurality of target time points in the acquisition time.

The calculation unit 62 is configured to calculate an acceleration of the target vehicle at each of the target time points, according to location information in the image frames corresponding to the target time points and a time interval between the target time points.

In an example not covered by the scope of the claims, the calculation unit is further configured to calculate a fitted acceleration of the target vehicle at an intermediate target time point, according to a previous target time point and location information corresponding to the previous target time point and a next target time point and location information corresponding to the next target time point, to obtain an acceleration of the target vehicle at the intermediate target time point. The intermediate target time point is between the previous target time point and the next target time point.

In an example not covered by the scope of the claims, the calculation unit is further configured to take an average value of a plurality of fitted accelerations corresponding to the intermediate target time point as an acceleration at the intermediate target time point.

In an example not covered by the scope of the claims, the emergency event is an emergency braking event of the target vehicle; the emergency event module is further configured to, in a case where an acceleration variance of the target vehicle is less than a threshold value of the acceleration variance, determine that a preset emergency event occurs for the target vehicle when at least one of the following conditions is met: an absolute value of the acceleration of the target vehicle is greater than a first acceleration threshold value; an absolute value of an average value of the accelerations of the target vehicle is greater than a second acceleration threshold value; and the number of the accelerations of the target vehicle with absolute values greater than a third acceleration threshold value is greater than a number threshold value.

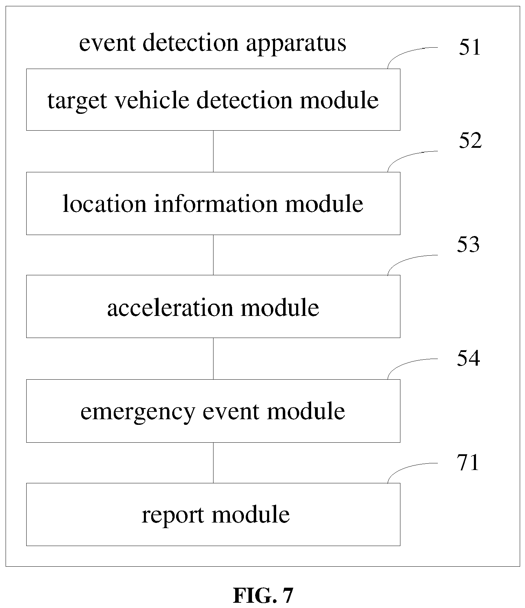

In an example not covered by the scope of the claims, as shown in FIG. 7, the event detection apparatus further includes a report module 71, configured to generate event report information according to the emergency event, and send the event report information.

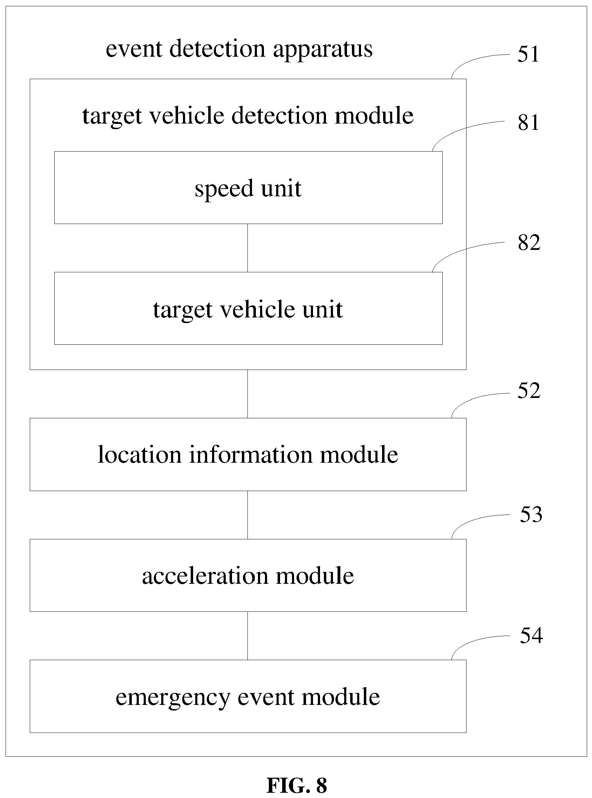

In an example not covered by the scope of the claims, as shown in FIG. 8, the target vehicle detection module 51 incudes a speed unit 81 and a target vehicle unit 82.

The speed unit 81 is configured to determine speeds of objects in a target area according to the surveillance video.

The target vehicle unit 82 is configured to take an object having a speed greater than a speed threshold value as the target vehicle.

For the functions of the modules in each apparatus according to the embodiments of the present disclosure, please refer to the corresponding descriptions in the above methods, and will not be described in detail here.

The embodiment of the present disclosure can be applied to an intelligent transportation vehicle-road cooperative system architecture which includes road side devices. The road side devices further include: a road side sensing device (e.g., a road side camera) and a road side computing device (e.g., a road side computing unit (RSCU)), the road side sensing device connected to the road side computing device, and the road side computing device connected to a server device. In another system architecture, the road side sensing device itself includes a computing function, and is directly connected to the server device. The above connection may be wired or wireless; the server device in the present disclosure is, for example, a cloud control platform, a vehicle-road cooperative management platform, a central subsystem, an edge computing platform, a cloud computing platform, etc.

According to the embodiments of the present disclosure, the present disclosure further provides an electronic device and a readable storage medium.

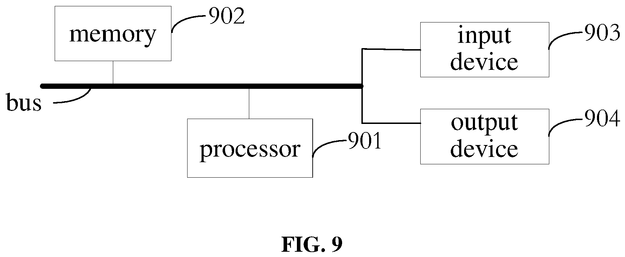

FIG. 9 is a block diagram of an electronic device for implementing an event detection method according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processor, a cellular phone, a smart phone, a wearable device and other similar computing devices. The components illustrated herein, connections and relationships therebetween, and functions thereof are merely examples, and are not intended to limit the implementation of the present disclosure described and/or claimed herein.

As shown in FIG. 9, the electronic device includes: one or more processors 901, a memory 902, and interfaces for connecting various components, including a high-speed interface and a low-speed interface. The various components are connected to each other by different buses, and may be mounted on a common mainboard or mounted in other ways as required. The processor may process instructions executed in the electronic device, including instructions stored in or on the memory to display Graphical User Interface (GUI) graphical information on an external input/output device (e.g., a display device coupled to an interface). In other embodiments, if necessary, a plurality of processors and/or a plurality of buses may be used together with a plurality of memories. Similarly, a plurality of electronic devices may be connected, each providing some necessary operations (e.g., acting as a server array, a group of blade servers, or a multi-processor system). In FIG. 9, one processor 901 is taken as an example.

The memory 902 is a non-transitory computer-readable storage medium provided by the present disclosure. The memory stores instructions executable by at least one processor, so that the at least one processor can perform the event detection method provided by the present disclosure. The non-transitory computer-readable storage medium of the present disclosure stores a computer instruction for enabling a computer to perform the event detection method provided by the present disclosure.

As a non-transitory computer readable storage medium, the memory 902 may be configured to store a non-transitory software program, a non-transitory computer executable program and modules, such as program instructions/modules corresponding to the event detection method in the embodiments of the present disclosure (e.g., the target vehicle detection module 51, the location information module 52, the acceleration module 53 and the emergency event module 54 as shown in FIG. 5). The processor 901 executes various functional applications and data processing of the electronic device by running the non-transitory software programs, instructions and modules stored in the memory 902, thereby performing various function applications of the server and the data processing, i.e., implementing the event detection method in the above method embodiment.

The memory 902 may include a program storage area and a data storage area, wherein the program storage area may store an operating system, and an application program required by at least one function; and the data storage area may store data created according to the use of the electronic device for implementing the event detection method. In addition, the memory 902 may include a high-speed random-access memory, and may also include a non-transitory memory, such as at least one magnetic disk memory device, a flash memory device, or any other non-transitory solid memory device. In some embodiments, the memory 902 optionally includes memories remotely located relative to the processor 901, and these remote memories may be connected to the electronic device for implementing the vehicle-road cooperative positioning method through a network. Examples of the network include, but are not limited to, the Internet, an intranet, a local area network, a mobile communication network and combinations thereof.

The above electronic device may further include: input means 903 and output means 904. The processor 901, the memory 902, the input means 903, and the output means 904 may be connected by buses or in other ways, and the bus connection is taken as an example in FIG. 9.

The input means 903 may receive input digitals or character information, and generate a key signal input related to a user setting and a function control of the electronic device for implementing the vehicle-road cooperative positioning method. The input means 903 for example may be a touch screen, a keypad, a mouse, a track pad, a touch pad, an indicator stick, one or more mouse buttons, a trackball, a joystick, etc. The output means 904 may include a display device, an auxiliary lighting apparatus (e.g., a light-emitting diode (LED)), a haptic feedback apparatus (e.g., a vibration motor), etc. The display device may include, but is not limited to, a liquid crystal display (LCD), an LED display, and a plasma display. In some embodiments, the display device may be a touch screen.

Various embodiments of the system and technology described here may be implemented in a digital electronic circuit system, an integrated circuit system, an Application Specific Integrated Circuit (ASIC), computer hardware, firmware, software, and/or combinations thereof. These various embodiments may be implemented in one or more computer programs executable and/or interpretable on a programmable system including at least one programmable processor, and the programmable processor may be a dedicated or general programmable processor and capable of receiving and transmitting data and instructions from and to a storage system, at least one input means, and at least one output means.

These computing programs (also called as programs, software, software applications, or codes) include machine instructions of the programmable processor, and may be implemented with advanced processes and/or object-oriented programming languages, and/or assembly/machine languages. As used herein, the terms 'machine-readable medium' and 'computer-readable medium' refer to any computer program product, device, and/or apparatus (e. g., a magnetic disk, an optical disk, a memory and a programmable logic device (PLD)) for providing the machine instructions and/or the data to the programmable processor, including a machine-readable medium that receives machine instructions as machine-readable signals. The term 'machine readable signal' refers to any signal for providing the machine instructions and/or the data to the programmable processor.

In order to provide an interaction with a user, the system and the technology described here may be implemented on a computer having a display device (e. g., a cathode ray tube (CRT) or an LCD monitor) for displaying information to the user; and a keyboard and a pointing apparatus (e. g., a mouse or a trackball), through which the user can provide an input to the computer. Other kinds of apparatuses can also provide an interaction with the user. For example, a feedback provided to the user may be any form of sensory feedback (e.g., a visual feedback, an auditory feedback, or a tactile feedback); and an input from the user may be received in any form (including an acoustic input, a voice input or a tactile input).

The system and the technology described here may be embodied in a computing system including background components (e.g., acting as a data server), or a computing system including middleware components (e.g., an application server), or a computing system including front-end components (e.g., a user computer with a graphical user interface or a web browser, through which the user can interact with the embodiments of the system and technology described here), or a computing system including any combination of such background components, middleware components and front-end components. The components of the system may be connected to each other through a digital data communication in any form or medium (e.g., a communication network). Examples of the communication network include a local area network (LAN), a wide area network (WAN) and the Internet.

A computer system may include a client and a server. The client and the server are generally remote from each other and usually interact through a communication network. The relationship between the client and the server is generated by computer programs running on corresponding computers and having a client-server relationship with each other.

According to the technical solutions of the embodiments of the present disclosure, the acceleration of the target vehicle is calculated according to the acquired surveillance video, and then it is judged whether an emergency event occurs for the target vehicle according to the acceleration of the target vehicle, so that an emergency event analysis can be carried out on each vehicle in the road by means of data acquired by a large number of cameras in the road environment, and the emergency situation of vehicles in the road traffic scene can be learnt quickly and accurately. This facilitates not only providing travelling state information of the surrounding vehicles to an autonomous vehicle in time, but also providing the travelling state information of other surrounding vehicles to an ordinary vehicle in time, so as to help drivers of the autonomous vehicle and the ordinary vehicle to learn the sudden change of the travelling state of any other vehicle in the road environment in time. For example, when the target vehicle is in a state of sudden braking, a vehicle behind the target vehicle may be subjected to a traffic accident such as a rear-end collision due to insufficient reaction. Through the method provided by the embodiment of the present disclosure, the emergency event such as the vehicle sudden braking may be quickly detected, so that the surrounding vehicles of the target vehicle can be notified quickly, which facilitates safe travelling of the vehicles in the road traffic scene.

## Claims

1. An event detection method, comprising:
detecting (S11) a target vehicle located in a target area according to a surveillance video of the target area;
determining (S12) acquisition time for the target vehicle and location information of the target vehicle in image frames corresponding to the acquisition time; wherein the location information of the target vehicle in the image frames is obtained by: determining pixel location information of the target vehicle in the image frames, and taking the pixel location information as the location information of the target vehicle in the image frames; or determining the pixel location information of the target vehicle in the image frames; converting the pixel location information of the target vehicle in the image frames into location information in a world coordinate system; and taking the location information in the world coordinate system as the location information of the target vehicle in the image frames;
obtaining (S13) an acceleration of the target vehicle according to at least the acquisition time and the location information; and
judging (S14) whether an emergency event occurs for the target vehicle according to the acceleration of the target vehicle,
wherein the acquisition time of the target vehicle comprises a plurality of target time points, which are time points included in the surveillance video, and wherein each of the target time points corresponds to a specific image frame;
wherein obtaining (S13) the acceleration of the target vehicle according to at least the acquisition time and the location information comprises:
determining a plurality of target time points in the acquisition time; and
calculating an acceleration of the target vehicle at each of the target time points, according to the location information in the image frames corresponding to the target time points and a time interval between the target time points;
wherein the emergency event is an emergency braking event of the target vehicle; judging (S14) whether the emergency event occurs for the target vehicle according to the acceleration of the target vehicle comprises:
in a case where an acceleration variance of the target vehicle is less than a threshold value of the acceleration variance, determining that a preset emergency event occurs for the target vehicle when at least one of the following three conditions is met:
an absolute value of the acceleration of the target vehicle is greater than a first acceleration threshold value;
an absolute value of an average value of the accelerations of the target vehicle is greater than a second acceleration threshold value; and
a number of the accelerations of the target vehicle with absolute values greater than a third acceleration threshold value is greater than a number threshold value;
wherein under a loose judgment policy, it is determined that the emergency braking event occurs for the target vehicle when any of the three conditions is met; under a moderate judgment policy, it is determined that the emergency braking event occurs for the target vehicle when two or more of the above three conditions are met; and under a strict judgment policy, it is determined that the emergency braking event occurs for the target vehicle when all of the three conditions are met.

2. The method according to claim 1, wherein calculating the acceleration of the target vehicle at each of the target time points, according to location information in image frames corresponding to the target time points and the time interval between the target time points comprises:
calculating a fitted acceleration of the target vehicle at an intermediate target time point, according to a previous target time point and location information corresponding to the previous target time point and a next target time point and location information corresponding to the next target time point, to obtain an acceleration of the target vehicle at the intermediate target time point;
wherein the intermediate target time point is between the previous target time point and the next target time point.

3. The method according to claim 2, wherein obtaining the acceleration of the target vehicle at the intermediate target time point comprises:
taking an average value of a plurality of fitted accelerations corresponding to the intermediate target time point as an acceleration at the intermediate target time point.

4. The method according to any one of claims 1 to 3, further comprising:
generating (S41) event report information according to the emergency event, and sending the event report information.

5. The method according to any one of claims 1 to 4, wherein detecting (S11) a target vehicle located in a target area according to a surveillance video of the target area comprises:
determining speeds of objects in a target area according to the surveillance video; and
taking an object having a speed greater than a speed threshold value as the target vehicle.

6. An electronic device, comprising:
at least one processor (901); and
a memory (902) communicatively connected to the at least one processor (901); wherein,
the memory (902) stores instructions, which are executable by the at least one processor (901) to enable the at least one processor (901) to perform the method according to any one of claims 1 to 5.

7. A computer readable storage medium, which stores computer instructions for enabling a computer to perform the method according to any one of claims 1 to 5.

8. The method according to claim 1, wherein the method is performed by a server device directly connected to a road side sensing device, and the surveillance video of the target area is acquired from a road side device.

9. A computer program product comprising computer executable instructions stored thereon, wherein the executable instructions, when executed by a processor (901), cause the processor (901) to perform the method according to any one of claims 1 to 5.

## Patentansprüche

1. Ereigniserkennungsverfahren, umfassend:
Erkennen (S11) eines Zielfahrzeugs, das sich in einem Zielbereich gemäß einem Überwachungsvideo des Zielbereichs befindet;
Bestimmen (S12) der Erfassungszeit für das Zielfahrzeug und Standortinformationen des Zielfahrzeugs in Einzelbildern, die der Erfassungszeit entsprechen; wobei die Standortinformationen des Zielfahrzeugs in den Einzelbildern erhalten werden durch: Bestimmen von Pixelstandortinformationen des Zielfahrzeugs in den Einzelbildern und Nehmen der Pixelstandortinformationen als die Standortinformationen des Zielfahrzeugs in den Einzelbildern; oder Bestimmen der Pixelstandortinformationen des Zielfahrzeugs in den Einzelbildern; Umwandeln der Pixelstandortinformationen des Zielfahrzeugs in den Einzelbildern in Standortinformationen in einem Weltkoordinatensystem; und Nehmen der Standortinformationen in dem Weltkoordinatensystem als die Standortinformationen des Zielfahrzeugs in den Einzelbildern;
Erhalten (S13) einer Beschleunigung des Zielfahrzeugs gemäß mindestens der Erfassungszeit und der Standortinformationen; und
Beurteilen (S14), ob ein Notfallereignis für das Zielfahrzeug gemäß der Beschleunigung des Zielfahrzeugs auftritt,
wobei die Erfassungszeit des Zielfahrzeugs eine Vielzahl von Zielzeitpunkten umfasst, die Zeitpunkte sind, die in dem Überwachungsvideo eingeschlossen sind, und wobei jeder der Zielzeitpunkte einem spezifischen Einzelbild entspricht;
wobei das Erhalten (S13) der Beschleunigung des Zielfahrzeugs gemäß mindestens der Erfassungszeit und der Standortinformationen umfasst:
Bestimmen einer Vielzahl von Zielzeitpunkten in der Erfassungszeit; und
Berechnen einer Beschleunigung des Zielfahrzeugs an jedem der Zielzeitpunkte gemäß den Standortinformationen in den Einzelbildern, die den Zielzeitpunkten entsprechen, und eines Zeitintervalls zwischen den Zielzeitpunkten;
wobei das Notfallereignis ein Notbremsereignis des Zielfahrzeugs ist; Beurteilen (S14), ob das Notfallereignis, das für das Zielfahrzeug gemäß der Beschleunigung des Zielfahrzeugs auftritt, umfasst:
in einem Fall, in dem eine Beschleunigungsvarianz des Zielfahrzeugs kleiner als ein Schwellenwert der Beschleunigungsvarianz ist, Bestimmen, dass ein voreingestelltes Notfallereignis für das Zielfahrzeug auftritt, wenn mindestens eine der folgenden drei Bedingungen erfüllt ist:
ein Absolutwert der Beschleunigung des Zielfahrzeugs über einem ersten Beschleunigungsschwellenwert liegt;
ein Absolutwert eines Durchschnittswerts der Beschleunigungen des Zielfahrzeugs über einem zweiten Beschleunigungsschwellenwert liegt; und
eine Anzahl der Beschleunigungen des Zielfahrzeugs mit Absolutwerten, die über einem dritten Beschleunigungsschwellenwert liegen, über einem Zahlenschwellenwert liegt;
wobei unter einer losen Beurteilungsrichtlinie bestimmt wird, dass das Notbremsereignis für das Zielfahrzeug auftritt, wenn eine der drei Bedingungen erfüllt ist; unter einer moderaten Beurteilungsrichtlinie bestimmt wird, dass das Notbremsereignis für das Zielfahrzeug auftritt, wenn zwei oder mehr der vorstehenden drei Bedingungen erfüllt sind; und unter einer strengen Beurteilungsrichtlinie bestimmt wird, dass das Notbremsereignis für das Zielfahrzeug auftritt, wenn alle drei Bedingungen erfüllt sind.

2. Verfahren nach Anspruch 1, wobei das Berechnen der Beschleunigung des Zielfahrzeugs an jedem der Zielzeitpunkte gemäß Standortinformationen in Einzelbildern, die den Zielzeitpunkten entsprechen, und dem Zeitintervall zwischen den Zielzeitpunkten umfasst:
Berechnen einer angepassten Beschleunigung des Zielfahrzeugs bei einem mittleren Zielzeitpunkt gemäß einem vorherigen Zielzeitpunkt und Standortinformationen, die dem vorherigen Zielzeitpunkt entsprechen, und einem nächsten Zielzeitpunkt und Standortinformationen, die dem nächsten Zielzeitpunkt entsprechen, um eine Beschleunigung des Zielfahrzeugs bei dem mittleren Zielzeitpunkt zu erhalten;
wobei der Zwischenzeitpunkt zwischen dem vorherigen Zielzeitpunkt und dem nächsten Zielzeitpunkt liegt.

3. Verfahren nach Anspruch 2, wobei das Erhalten der Beschleunigung des Zielfahrzeugs an dem mittleren Zielzeitpunkt umfasst:
Nehmen eines Durchschnittswerts einer Vielzahl von angepassten Beschleunigungen, die dem mittleren Zielzeitpunkt entsprechen, als eine Beschleunigung an dem mittleren Zielzeitpunkt.

4. Verfahren nach einem der Ansprüche 1 bis 3, ferner umfassend:
Erzeugen (S41) von Ereignisprotokollinformationen gemäß dem Notfallereignis und Senden der Ereignisprotokollinformationen.

5. Verfahren nach einem der Ansprüche 1 bis 4, wobei das Erkennen (S11) eines Zielfahrzeugs, das sich in einem Zielbereich gemäß einem Überwachungsvideo des Zielbereichs befindet, umfasst:
Bestimmen von Geschwindigkeiten von Objekten in einem Zielbereich gemäß dem Überwachungsvideo; und Nehmen eines Objekts, das eine Geschwindigkeit über einem Geschwindigkeitsschwellenwert als das Zielfahrzeug aufweist.

6. Elektronische Vorrichtung, umfassend:
mindestens einen Prozessor (901); und
einen Speicher (902), der mit dem mindestens einen Prozessor (901) kommunikativ verbunden ist; wobei
der Speicher (902) Anweisungen speichert, die durch den mindestens einen Prozessor (901) ausführbar sind, um dem mindestens einen Prozessor (901) zu ermöglichen, das Verfahren nach einem der Ansprüche 1 bis 5 durchzuführen.

7. Computerlesbares Speicherungsmedium, das Computeranweisungen zum Ermöglichen eines Computers speichert, das Verfahren nach einem der Ansprüche 1 bis 5 durchzuführen.

8. Verfahren nach Anspruch 1, wobei das Verfahren durch eine Servervorrichtung durchgeführt wird, die mit einer Straßenseitenerfassungsvorrichtung direkt verbunden ist, und das Überwachungsvideo des Zielbereichs von einer Straßenseitenvorrichtung erfasst wird.

9. Computerprogrammprodukt, umfassend computerausführbare Anweisungen, die darauf gespeichert sind, wobei die ausführbaren Anweisungen, wenn sie durch einen Prozessor (901) ausgeführt werden, den Prozessor (901) veranlassen, das Verfahren nach einem der Ansprüche 1 bis 5 durchzuführen.

## Revendications

1. Procédé de détection d'événement, comprenant :
la détection (S11) d'un véhicule cible situé dans une zone cible selon une vidéo de surveillance de la zone cible ;
la détermination (S12) d'un temps d'acquisition pour le véhicule cible et d'informations d'emplacement du véhicule cible dans des trames d'image correspondant au temps d'acquisition ; dans lequel les informations d'emplacement du véhicule cible dans les trames d'image sont obtenues par : la détermination d'informations d'emplacement de pixel du véhicule cible dans les trames d'image, et la prise des informations d'emplacement de pixel en tant qu'informations d'emplacement du véhicule cible dans les trames d'image ; ou la détermination des informations d'emplacement de pixel du véhicule cible dans les trames d'image ; la conversion des informations d'emplacement de pixel du véhicule cible dans les trames d'image en informations d'emplacement dans un système de coordonnées mondial ; et la prise des informations d'emplacement dans le système de coordonnées mondial en tant qu'informations d'emplacement du véhicule cible dans les trames d'image ;
l'obtention (S13) d'une accélération du véhicule cible selon au moins le temps d'acquisition et les informations d'emplacement ; et
le fait de juger (S14) si un événement d'urgence se produit pour le véhicule cible selon l'accélération du véhicule cible,
dans lequel le temps d'acquisition du véhicule cible comprend une pluralité de points temporels cibles, qui sont des points temporels inclus dans la vidéo de surveillance, et dans lequel chacun des points temporels cibles correspond à une trame d'image spécifique ;
dans lequel l'obtention (S13) de l'accélération du véhicule cible selon au moins le temps d'acquisition et les informations d'emplacement comprend :
la détermination d'une pluralité de points temporels cibles dans le temps d'acquisition ; et
le calcul d'une accélération du véhicule cible à chacun des points temporels cibles, selon les informations d'emplacement dans les trames d'image correspondant aux points temporels cibles et un intervalle de temps entre les points temporels cibles ;
dans lequel l'événement d'urgence est un événement de freinage d'urgence du véhicule cible ; le fait de juger (S14) si l'événement d'urgence se produit pour le véhicule cible selon l'accélération du véhicule cible comprend :
dans un cas où une variance d'accélération du véhicule cible est inférieure à une valeur seuil de la variance d'accélération, la détermination du fait qu'un événement d'urgence prédéfini se produit pour le véhicule cible lorsqu'au moins l'une parmi les trois conditions suivantes est respectée :
une valeur absolue de l'accélération du véhicule cible est supérieure à une première valeur seuil d'accélération ;
une valeur absolue d'une valeur moyenne des accélérations du véhicule cible est supérieure à une seconde valeur seuil d'accélération ; et
un nombre des accélérations du véhicule cible avec des valeurs absolues supérieures à une troisième valeur seuil d'accélération est supérieur à une valeur seuil de nombre,
dans lequel, dans une politique de jugement souple, il est déterminé que l'événement de freinage d'urgence se produit pour le véhicule cible lorsque l'une quelconque des trois conditions est remplie ; dans une politique de jugement modérée, il est déterminé que l'événement de freinage d'urgence se produit pour le véhicule cible lorsque deux ou plus des trois conditions ci-dessus sont remplies ; et dans une politique de jugement stricte, il est déterminé que l'événement de freinage d'urgence se produit pour le véhicule cible lorsque toutes les trois conditions sont remplies.

2. Procédé selon la revendication 1, dans lequel le calcul de l'accélération du véhicule cible à chacun des points temporels cibles, selon des informations d'emplacement dans des trames d'image correspondant aux points temporels cibles et l'intervalle de temps entre les points temporels cibles comprend :
le calcul d'une accélération ajustée du véhicule cible à un point temporel cible intermédiaire, selon un point temporel cible précédent et des informations d'emplacement correspondant au point temporel cible précédent et un point temporel cible suivant et des informations d'emplacement correspondant au point temporel cible suivant, pour obtenir une accélération du véhicule cible au point temporel cible intermédiaire ;
dans lequel le point temporel cible intermédiaire est entre le point temporel cible précédent et le point temporel cible suivant.

3. Procédé selon la revendication 2, dans lequel l'obtention de l'accélération du véhicule cible au point temporel cible intermédiaire comprend :
la prise d'une valeur moyenne d'une pluralité d'accélérations ajustées correspondant au point temporel cible intermédiaire en tant qu'accélération au point temporel cible intermédiaire.

4. Procédé selon l'une quelconque des revendications 1 à 3 comprenant en outre :
la génération (S41) d'informations de rapport d'événement selon l'événement d'urgence, et l'envoi des informations de rapport d'événement.

5. Procédé selon l'une quelconque des revendications 1 à 4, dans lequel la détection (S11) d'un véhicule cible situé dans une zone cible selon une vidéo de surveillance de la zone cible comprend :
la détermination de vitesses d'objets dans une zone cible selon la vidéo de surveillance ; et la prise d'un objet ayant une vitesse supérieure à une valeur seuil de vitesse en tant que véhicule cible.

6. Dispositif électronique, comprenant :
au moins un processeur (901) ; et
une mémoire (902) connectée en communication avec l'au moins un processeur (901) ; dans lequel,
la mémoire (902) stocke des instructions qui sont exécutables par l'au moins un processeur (901) pour permettre à l'au moins un processeur (901) d'effectuer le procédé selon l'une quelconque des revendications 1 à 5.

7. Support de stockage lisible par ordinateur, qui stocke des instructions informatiques pour permettre à un ordinateur d'effectuer le procédé selon l'une quelconque des revendications 1 à 5.

8. Procédé selon la revendication 1, dans lequel le procédé est effectué par un dispositif serveur directement connecté à un dispositif de détection côté route, et la vidéo de surveillance de la zone cible est acquise à partir d'un dispositif côté route.

9. Produit-programme d'ordinateur comprenant des instructions exécutables par ordinateur stockées sur celui-ci, dans lequel les instructions exécutables, lorsqu'elles sont exécutées par un processeur (901), amènent le processeur (901) à effectuer le procédé selon l'une quelconque des revendications 1 à 5.
